# EUROPÄISCHE PATENTSCHRIFT

(11) **EP 1 871 915 B1**
(45) Veröffentlichungstag und Bekanntmachung des Hinweises auf die Patenterteilung: **07.01.2009**
(21) Anmeldenummer: 06723893.1
(22) Anmeldetag: 31.03.2006
(51) Int. Cl.: C21B 3/06, C04B 5/02

(54) **VERFAHREN UND ANLAGE ZUR SCHLACKENGRANULIERUNG**
METHOD AND INSTALLATION FOR SLAG GRANULATION
PROCEDE ET INSTALLATION DE GRANULATION DE SCORIES

(30) Priorität: 11.04.2005 EP 05102839
(43) Veröffentlichungstag der Anmeldung: 02.01.2008
(73) Patentinhaber: VAI Industries (UK) Limited, Bournemouth International Airport Christchurch Dorset BH23 6EW (GB)
(72) Erfinder: VULETIC, Bogdan, 40451 Düsseldorf (DE)
(74) Vertreter: Maier, Daniel Oliver
(86) Internationale Anmeldenummer: PCT/EP2006/002932
(87) Internationale Veröffentlichungsnummer: WO 2006/108517

(56) Entgegenhaltungen:
- US-A- 3 523 015
- PATENT ABSTRACTS OF JAPAN Bd. 013, Nr. 283 (C-612), 28. Juni 1989 (1989-06-28) & JP 01 079044 A (KAWASAKI STEEL CORP; others: 01), 24. März 1989 (1989-03-24) in der Anmeldung erwähnt
- "GERINGER FLACHENBEDARF LAMELLENABSCHEIDER" CHEMIETECHNIK, HUTHIG, HEIDELBERG, DE, Bd. 23, Nr. 1, Januar 1994 (1994-01), Seite 61, XP000426526 ISSN: 0340-9961
- PATENT ABSTRACTS OF JAPAN Bd. 004, Nr. 012 (C-071), 29. Januar 1980 (1980-01-29) & JP 54 146295 A (KUBOTA LTD), 15. November 1979 (1979-11-15)
- PATENT ABSTRACTS OF JAPAN Bd. 016, Nr. 509 (C-0997), 21. Oktober 1992 (1992-10-21) & JP 04 187550 A (MITSUBISHI MATERIALS CORP), 6. Juli 1992 (1992-07-06)
- RADOUX H., BERNARD G. UND WAGNER R.: FACHBERICHTE HÜTTENPRAXIS METALLWEITERVERARBEITUNG, Bd. 20, Nr. 10, 1982, Seiten 744-746, XP009051824 in der Anmeldung erwähnt

## Beschreibung

Die Erfindung betrifft ein Verfahren zur Schlackengranulierung, bei welchem geschmolzene Schlacke durch Wasserstrahlen in Schlackensand umgewandelt wird, der Schlackensand anschließend in einer Entwässerungsanlage entwässert wird, indem mit zumindest einer schräg in einem ersten Absetzbecken angeordneten Förderschnecke gröberer Schlackensand abgezogen wird und Überlaufwasser aus dem ersten Absetzbecken in ein zweites Absetzbecken geleitet wird, und wobei Überlaufwasser wieder der Schlackengranulierung zugeführt wird, sowie eine entsprechende Schlackengranulierungsanlage.

Die Erfindung bezieht sich insbesondere auf Schlacke aus einem Hochofen und/oder einer Schmelzreduktionsanlage.

Im Allgemeinen wird die aus einem Hochofen oder einer Schmelzreduktionsanlage stammende heisse Schlacke in Granulat (Schlackensand) umgewandelt, wie z. B. durch rasches Abkühlen und Zerschlagen mit Wasser. Nach dem Granulieren fliesst das Granulat-Wasser-Gemisch über einen Granulierbehälter und einen Kanal zu einer Entwässerungsanlage. In dieser wird der Schlackensand entwässert und nach einer Nachentwässerung auf einem Granulatlagerplatz oder in mehreren Nachentwässerungssilos gelagert, von wo aus es als Fertigprodukt verkauft werden kann.

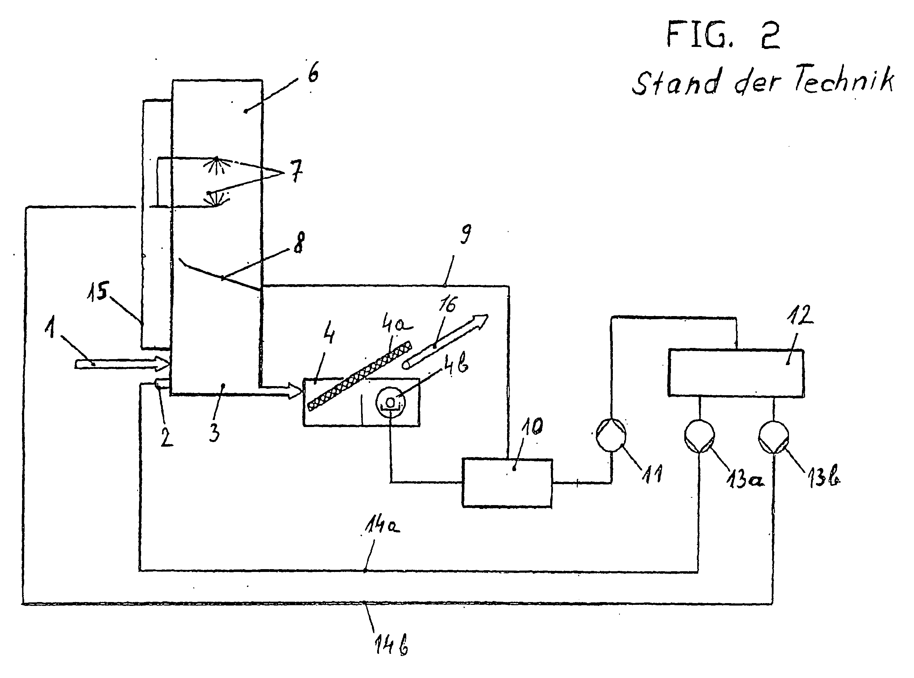

Fig. 2 zeigt den Aufbau einer bekannten Schlackengranulierungsanlage, welche beispielsweise in der Eisenerzeugungsindustrie eingesetzt wird.

In dieser wird über eine Schlackenrinne 1 zugeführte geschmolzene Schlacke durch aus Düsen 2 austretende Wasserstrahlen in einer Sprühkammer 3 in Schlackensand umgewandelt, wobei dieser rasch abkühlt. In einer nachfolgenden Entwässerungsanlage 4 wird der Schlackensand vom Prozesswasser getrennt und dann über Fördervorrichtungen 16 zum Sandlagerplatz abtransportiert.

Der bei Schlackenumwandlung (Granulierprozess) entstehende Wasserdampf wird in einem oberhalb der Sprühkammer 3 angeordneten Kondensierturm 6 durch Verrieselung von Kühlwasser über Düsen 7 zur Kondensation gebracht und die ebenfalls bei dem Granulierprozess gebildeten Gase wie H₂S und SO₂ werden zum grossen Teil in diesem Wasser gelöst. Das versprühte Kühlwasser wird zusammen mit dem Wasserdampfkondensat am Boden 8 des Kondensierturmes 6 gesammelt und über eine Leitung 9 zu einem Heisswasserbecken 10 geführt, welchem auch das von dem Schlackensand getrennte Prozesswasser aus der Entwässerungsanlage 4 zugeleitet wird.

Mittels einer Heisswasserpumpe 11 wird das vermischte Prozess- und Kondensationswasser aus dem Heisswasserbecken 10 zu einem Kühlturm 12 gepumpt und anschliessend einerseits als Prozesswasser über einer Vorlaufwasserpumpe 13a und eine Rohrleitung 14a zu den Düsen 2 und andererseits als Kühlwasser über eine Vorlaufwasserpumpe 13b und eine Rohrleitung 14b zu den Düsen 7 befördert.

Da es sich um eine Trennung des Prozesswassers vom Schlackensand in einem relativ kleinen Absetzbecken mit einer schräg installierten Förderschnecke 4a als Entwässerungs-/Austragsvorrichtung handelt, ist der Gehalt an feinen und sehr abrasiven Schlackenpartikeln im Überlaufwasser relativ hoch. Diese abrasiven Schlackenpartikel führen zu einem schnellen Verschleiss der Düsen, Pumpen, Rohrleitungen und Armaturen der gesamten Schlackengranulierungsanlage, in die Prozesswasser rückgeführt wird.

Darüberhinaus begünstigen die Zementeigenschaften der Feststoffe eine Agglomeration des abgelagerten feineren Schlackensands sowie das Verstopfen von Düsen und Rohrleitungen, so dass das Betreiben der bekannten Schlackengranulierungsanlage mit einer sehr intensiven Wartung, geringer Verfügbarkeit und eingeschränkter Funktion verbunden ist.

Um diese Probleme zu lösen, ist in einer nachgebesserten Ausführung gemäß dem Stand der Technik dem Absetzbecken mit der Förderschnecke 4a ein Trommelsiebfilter 4b nachgeschaltet, um die feinen Schlackenpartikel auszufiltrieren, die als Filterkuchen zusammen mit dem entwässerten Schlackensand von der Förderschnecke 4a über die Fördervorrichtungen 5 zum Sandlagerplatz abtransportiert werden.

In Unterschied zu diesem Verfahren, bei dem das Prozesswassers vom Schlackensand in zwei Stufen getrennt wird, erfolgt bei dem aus Radoux, H., Bernard, G. und Wagner, R., "INBA" -das neue System zur Herstellung von granulierten Schlacke mit kontinuierlicher Filterung und Förderung - bekannten Verfahren, die Trennung des Prozesswassers vom Schlackensand in einer Stufe bzw. in einem Trommelsiebfilter. Da dieses Filter wegen grossen Schlackensand-Mengen mit einem grobmaschiegen Sieb ausgerüstet ist, ist der Gehalt an feinen und sehr abrasiven Schlackenpartikeln im Wasser sehr hoch, mit den bekannten Nachteilen die sich daraus ergeben.

Ausserdem sind die beiden Verfahren schlecht geeignet für die Granulierung von basischen Schlacken, da die Abschlämmwassermengen zu groß werden, die Filtrationsflächen schnell zuwachsen und somit oft gespült werden müssen, wodurch grosse Abschlämmwassermengen anfallen. Dies ist auch der Fall bei Hochofenanlagen, die mit neutralen Schlacken (sauer-basisch) betrieben werden. Dazu kommt, dass das Abschlämmwasser einer komplexen Behandlung unterzogen werden muss, bevor es in die Kanalisation abgeführt wird. Damit die Härte des Kreislaufwassers auf einem niedrigem Niveau aufrecht erhalten wird, muss ein Teil des Kreislaufwassers als Abschlämmwasser abgeführt und nachbehandelt werden bevor es in die Kanalisation abgeleitet wird. Ausserdem müssen die Trommelsiebfilter trotz grosser Mengen an Abschlämmwasser auch bei neutralen Schlacken öfters gereinigt werden, was zu einer starken Verminderung der Verfügbarkeit der Anlagen führt.

Das englische Abstract der japanischen Patentanmeldung Nr. 64-79044 A2 zeigt eine Schlackengranulierungsanlage, wo hinter dem ersten Absetzbecken 5 ein zweites Absetzbecken 13 angeordnet ist und in einer weiteren Trennanlage 31 leichte Schlacke abgetrennt wird. Aus dem zweiten Absetzbecken 13 führt eine Leitung zurück in das Absetzbecken 5. Durch das Absetzbecken 5 und die Rückführung kann aber die Abscheidung von feinerem Schlackensand nicht oder nur unzureichend erreicht werden.

Eine Aufgabe der vorliegenden Erfindung besteht nun darin, ein Verfahren und eine Anlage zur Schlackengranulierung zu schaffen, welche in verringertem Masse verschleissanfällig ist, die auch zum Granulieren von neutralen und basischen Schlacken besser geeignet ist und die ohne Abschlämmwasser betrieben werden kann.

Diese Aufgabe wird erfindungsgemäss durch ein Verfahren nach Anspruch 1 bzw. durch eine Schlackengranulierungsanlage mit den Merkmalen des Anspruchs 9 gelöst. Vorteilhafte Weiterbildungen der erfindungsgemässen Anlage ergeben sich aus den Unteransprüchen.

Dadurch, dass im zweiten Absetzbecken feinerer Schlackensand durch Sedimentation abgesetzt wird und der abgesetzte feinere Schlackensand direkt dem Entwässerungsbereich der Förderschnecke des ersten Absetzbeckens aufgegeben wird, kann der feinere Schlackensand abgeschieden und sofort aus der Schlackengranulierungsanlage entfernt werden. Der Verschleiß der übrigen Anlagenteile wird dadurch auf jeden Fall verringert. Neutrale und basische Schlacken können besser verarbeitet werden, weil keine Filter oder Siebe vorhanden sind, die verstopfen können. Somit muss auch keine Reinigung dieser Anlagenteile durchgeführt werden, es fällt daher kein Abschlämmwasser an. Die erfindungsgemäße Schlackengranulierungsanlage bzw. das erfindungsgemäße Verfahren ist daher umwelt- und wartungsfreundlicher, die Verfügbarkeit und Lebensdauer der Schlackengranulierungsanlage wird erhöht.

Der Entwässerungsbereich der Förderschnecke ist jener Teil, der über die Wasseroberfläche des ersten Absetzbeckens hinausreicht.

Eine Ausgestaltung der Erfindung besteht darin, dass der abgesetzte feinere Schlackensand dem Beginn des Entwässerungsbereichs der Förderschnecke aufgegeben wird. Der Beginn des Entwässerungsbereichs liegt direkt über der Wasseroberfläche des Absetzbeckens. Diese Ausgestaltung hat den Vorteil, dass der feinere Schlackensand in den gröberen Schlackensand gut einsickern kann und sicher mit diesem ausgetragen wird.

Um den sedimentierten Schlackensand aus dem zweiten Absetzbecken zu entfernen, kann vorgesehen werden, dass der sedimentierte Schlackensand mittels einer oder mehrerer Schlammabzugspumpen abgezogen wird.

Um den Schlackensand besser austragen zu können, ist es hilfreich, wenn die Sedimentation auf einen oder mehrere Bereiche des zweiten Absetzbeckens konzentriert wird. Dazu kann vorgesehen werden, dass das zweite Absetzbecken zumindest eine Vertiefung aufweist, in welcher feinerer Schlackensand sedimentiert wird.

Unter einer Vertiefung versteht man, dass die Begrenzung des Absetzbeckens nach unten keine horizontale Ebene ist, sondern dass Teile dieser Begrenzung tiefer liegen als andere. Geht man von einem rechteckigen Absetzbecken aus, so könnte eine erfindungsgemäße Vertiefung vorgesehen werden, in dem beispielsweise das Absetzbecken über die gesamte Länge trogförmig ausgebildet wird. Dabei sind die Seitenwände nach unten hin nach innen geneigt, der Boden ist konkav nach unten gewölbt. Eine andere mögliche Ausführungsform besteht darin, dass der Boden eines Absetzbeckens mit beliebigem Grundriss eine oder mehrere trichterförmige Vertiefungen aufweist.

Um den sedimentierten Schlackensand nur mit einer Schlammabzugspumpe absaugen zu können, kann vorgesehen werden, dass der sedimentierte Schlackensand mittels Fördereinrichtungen, wie eine oder mehrere Förderschnecken oder ein Kettenförderer, zum Saugstutzen der Schlammabzugspumpe, welcher sich vorzugsweise unterhalb des Überlaufwassereintritts befindet, gefördert wird. Solche Fördereinrichtungen sind nicht notwendig, wenn im Boden des Absetzbeckens trichterförmige Vertiefungen vorgesehen werden und Saugstutzen der Schlammabzugspumpen dort angeordnet sind.

Um die Sedimentation im zweiten Absetzbecken möglichst wenig zu stören, kann vorgesehen werden, dass das Überlaufwasser über ein breites Fenster mit horizontal gerichteter Strömung unterhalb der Wasseroberfläche des zweiten Absetzbeckens eingeleitet wird.

Wenn vorgesehen wird, dass im zweiten Absetzbecken die Sedimentation mittels Lamellen erfolgt, also dass ein Lamellenabscheider verwendet wird, kann das zweite Absetzbecken kleiner ausgeführt werden als ohne Lamellen, weil die in der Regel schräg angeordneten Lamellen die Sedimentation beschleunigen.

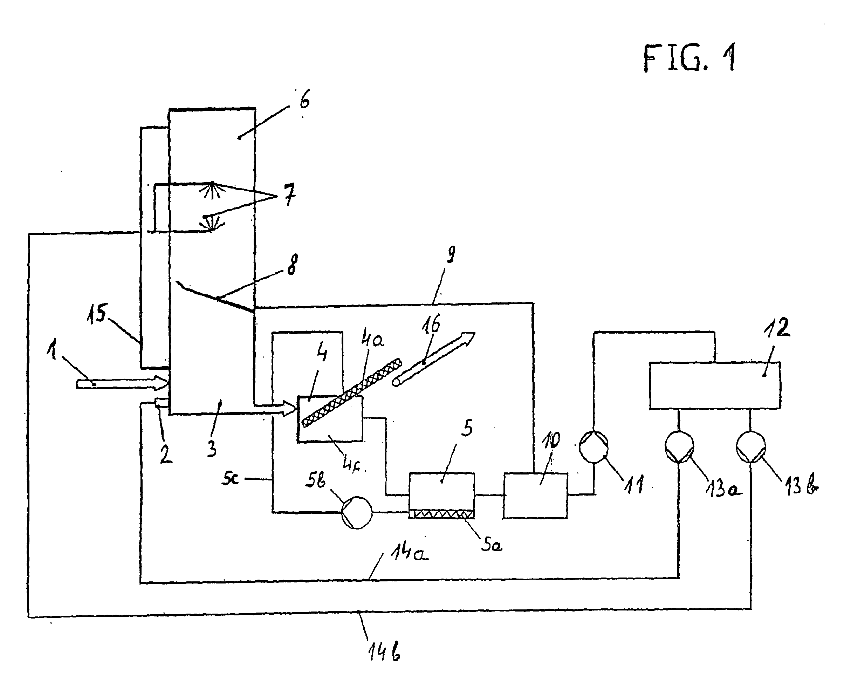

Die Erfindung wird anhand eines in den Figuren 1 und 2 dargestellten Beispiels und der folgenden Beschreibung näher erläutert. Es zeigen
Fig. 1 eine schematische Darstellung einer erfindungsgemässen Schlackengranulierungsanlage und
Fig. 2 eine schematische Darstellung einer Schlackengranulierungsanlage nach dem Stand der Technik.

Die erfindungsgemäße Schlackengranulierungsanlage nach Fig. 1 funktioniert bezüglich Schlackengranulierung und Wasserführung wie die Anlage gemäß dem Stand der Technik in der bereits oben beschriebenen Fig. 2: Zugeführte geschmolzene Schlacke wird in einer Sprühkammer 3 durch über Düsen 2 injizierte Wasserstrahlen in Schlackensand umgewandelt und der Schlackensand anschliesend in einer Entwässerungsanlage 4 entwässert. In der Sprühkammer 3 entstandener Wasserdampf wird in einem Kondensierturm 6 durch eingesprühtes Kühlwasser kondensiert. Das vom Schlackensand getrennte Prozesswasser sowie das Kondensationswasser werden nach Abkühlung in einem Kühlturm 12 zur Sprühkammer 3 und dem Kondensierturm 6 zurückgeführt. Mit Leitung 15 wird Gas aus dem Kondensierturm 6 zur Sprühkammer 3 rückgeführt. Der entwässerte Schlackensand wird über die Fördervorrichtungen 16 zum Sandlagerplatz abtransportiert.

Einem relativ kleinen Absetzbecken 4c mit einer schräg installierten Förderschnecke 4a als Schlackensand-Entwässerungs- und Austragsvorrichtung wird ein grösseres Absetzbecken 5 zur Abscheidung von feinen Schlackenpartikeln nachgeschaltet. Die abgeschiedenen Schlackenpartikel werden von einer Förderschnecke 5a zum Saugstutzen einer Schlammabzugspumpe 5b transportiert, die diese über die Leitung 5c zur Förderschnecke 4a pumpt. Der Wasserkreislauf wird weitgehend von abrasiven Schlackenpartikeln befreit, sodass die restliche Anlage vom Verschleiss verschont bleibt.

Das Absetzbecken 5 ist in Form eines Trogs mit steilen seitlichen Wänden ausgebildet, bei dem der abgeschiedene Schlackensand in Form von Schlamm zur Mitte rutscht. Der Schlackensand wird durch die im Trog des Absetzbeckens 5 eingebaute Förderschnecke 5a, vorzugsweise zur Überlaufwassereintrittsseite gefördert, von wo er mittels einer Schlammabzugspumpe 5b abgezogen, über die Leitung 5c zur Förderschnecke 4a gepumpt und mit gröberem Schlackensand entwässert und ausgetragen wird. Dadurch wird der Reinigungs- und Wartungsaufwand stark reduziert und die Verfügbarkeit der Gesamtanlage bedeutend erhöht.

Durch Einleiten des Überlaufwassers von der ersten Entwässerungsstufe 4 über ein breites Fenster unterhalb der Oberfläche des Wassers im Absetzbecken 5 und mit horizontal gerichteter Strömung, wird der Abscheidegrad des Absetzbeckens 5 erhöht und der zur Überlaufwassereintrittsseite geförderte Schlamm wird nicht durch Turbulenzen aufgewirbelt.

Durch Ausführung des Bodens des Absetzbeckens 5 in Form eines Trogs oder in Form von mehreren Abzugstrichtern mit steilen Wänden wird erreicht, dass der Schlamm, der nach gewisser Zeit agglomeriert, zur Förderschnecke 5a bzw. zu mehreren kürzeren Förderschnecken rutscht bevor es zur Agglomeration kommt und die eventuell gebildeten, meistens weichen Agglomerate von der Förderschnecke zerstört bzw. zerkleinert werden.

Für die Förderung des entlang des Absetzbeckens 5 abgesetzten feinen Schlackensandes, in Richtung des Saugstutzens der Schlammabzugspumpe 5b, kann an Stelle einer Förderschnecke ein Kettenförderer oder jede andere geeignete Fördereinrichtung eingesetzt werden.

Für die Förderung des Schlammes vom Absetzbecken 5 zur Förderschnecke 4a ist eine Schlammabzugspumpe 5b in Kombination mit einer Förderschnecke 5a, die den abgeschiedenen Schlamm kontinuierlich zum Saugstutzen der Schlammabzugspumpe fördert, wobei diese den Schlamm kontinuierlich über die Leitung 5c zur Förderschnecke 4a pumpt, als vorteilhafte Ausführung anzusehen. Eine alternative Lösung wäre eine im Absetzbecken 5 schräg installierte Förderschnecke, mit dem Nachteil, dass die Schlammzugabe zur Förderschnecke 4a nicht optimal ausgeführt werden kann, womit ein grosser Teil der feinen Schlackenpartikeln wieder zum Absetzbecken 4c gelangen und den Feststoffgehalt des Überlaufwassers vom Absetzbecken 4c drastisch erhöhen würde.

Der Boden des Absetzbeckens 5 kann in Form von Abzugstrichtern ausgebildet werden, aus denen der Schlamm mit Hilfe Schlammabzugspumpen 5b abtransportiert wird, so dass die Förderschnecke oder eine andere Fördervorrichtung nicht erforderlich wird.

Durch die Zugabe der aus dem Absetzbecken 5 abgezogenen feinen Schlackenpartikeln am Anfang der Entwässerungszone der Förderschnecke 4a wird erreicht, dass die feinen Schlackenpartikeln mit gröberen Schlackensand ausgetragen und entwässert werden und nicht zum Absetzbecken 4c gelangen, was bei der Zugabe zum oder vor dem Absetzbecken 4c der Fall wäre.

An Stelle des Absetzbeckens 5 kann auch ein vom Platzbedarf her viel kleinerer Lamelleneindicker eingesetzt werden. Ohne Lamellen wird aber das zweite Absetzbecken größer sein müssen.

Dadurch, dass für die Entwässerung des Schlackensandes keine Filter erforderlich sind, kann für die Anlage als Zusatzwasser das Abschlämmwasser aus anderen Anlagen verwendet werden und die Anlage auch in diesem Fall ohne Abschlämmwasser betrieben werden, vorausgesetzt dass die mitgebrachten Stoffe sich nicht negativ auf die Qualität des Schlackensandes auswirken, der überwiegend in der Zementindustrie eingesetzt und thermischen Prozessen unterzogen wird, und die Umwelt nicht belasten. Die im Kreislaufwasser gelöste Salze, die bei Übersättigung durch Verdunstung ausfallen, werden mit dem Schlackensand ausgetragen.

### Bezugszeichenliste:

- 1: Schlackenrinne
- 2: Düsen
- 3: Sprühkammer
- 4: Entwässerungsanlage
- 4a: Förderschnecke
- 4b: Trommelsiebfilter
- 4c: erstes Absetzbecken
- 5: zweites Absetzbecken
- 5a: Förderschnecke
- 5b: Schlammabzugspumpe
- 5c: Förderleitung
- 6: Kondensierturm
- 7: Düsen
- 8: Boden des Kondensierturmes
- 9: Leitung zu Heisswasserbecken 10
- 10: Heisswasserbecken
- 11: Heisswasserpumpe
- 12: Kühlturm
- 13a: Vorlaufwasserpumpe
- 13b: Vorlaufwasserpumpe
- 14a: Rohrleitung zu den Düsen 2
- 14b: Rohrleitung zu den Düsen 7
- 15: Leitung für Gas aus dem Kondensierturm 6 zur Sprühkammer 3
- 16: Fördervorrichtungen

## Patentansprüche

1. Verfahren zur Schlackengranulierung, bei welchem geschmolzene Schlacke durch Wasserstrahlen in Schlackensand umgewandelt wird, der Schlackensand anschließend in einer Entwässerungsanlage (4) entwässert wird, indem mit zumindest einer schräg in einem ersten Absetzbecken (4c) angeordneten Förderschnecke (4a) gröberer Schlackensand abgezogen wird und Überlaufwasser aus dem ersten Absetzbecken (4c) in ein zweites Absetzbecken (5), in dem feinerer Schlackensand durch Sedimentation abgesetzt wird, geleitet wird, und wobei Überlaufwasser wieder der Schlackengranulierung zugeführt wird, **dadurch gekennzeichnet, dass** der abgesetzte feinere Schlackensand direkt dem über die Wasseroberfläche des ersten Absetzbeckens (4c) hinausreichenden Entwässerungsbereich der Förderschnecke (4a) des ersten Absetzbeckens (4c) aufgegeben wird.

2. Verfahren nach Anspruch 1, **dadurch gekennzeichnet, dass** der abgesetzte feinere Schlackensand dem Beginn des Entwässerungsbereichs der Förderschnecke (4a) aufgegeben wird.

3. Verfahren nach Anspruch 1 oder 2, **dadurch gekennzeichnet, dass** der sedimentierte Schlackensand mittels einer oder mehrerer Schlammabzugspumpen abgezogen wird.

4. Verfahren nach einem der Ansprüche 1 bis 3, **dadurch gekennzeichnet, dass** das zweite Absetzbecken (5) zumindest eine Vertiefung aufweist, in welcher feinerer Schlackensand sedimentiert wird.

5. Verfahren nach einem der Ansprüche 3 bis 4, **dadurch gekennzeichnet, dass** der sedimentierte Schlackensand mittels Fördereinrichtungen (5a), wie eine oder mehrere Förderschnecken oder ein Kettenförderer, zum Saugstutzen der Schlammabzugspumpe (5b), welcher sich vorzugsweise unterhalb des Überlaufwassereintritts befindet, gefördert wird.

6. Verfahren nach einem der Ansprüche 1 bis 5, **dadurch gekennzeichnet, dass** das Überlaufwasser über ein breites Fenster mit horizontal gerichteter Strömung unterhalb der Wasseroberfläche des zweiten Absetzbeckens (5) eingeleitet wird.

7. Verfahren nach einem der Ansprüche 1 bis 6, **dadurch gekennzeichnet, dass** im zweiten Absetzbecken (5) die Sedimentation mittels Lamellen erfolgt.

8. Verfahren nach einem der Ansprüche 1 bis 7, **dadurch gekennzeichnet, dass** dem ersten (4c) und/oder dem zweiten (5) Absetzbecken Abschlämmwasser aus anderen Anlagen zugegeben wird.

9. Schlackengranulierungsanlage mit einer Einrichtung zur Umwandlung von geschmolzener Schlacke zu Schlackensand, der eine Entwässerungsanlage (4) nachgeschaltet ist, welche zumindest eine schräg in einem ersten Absetzbecken (4c) angeordnete Förderschnecke (4a) aufweist, mit der gröberer Schlackensand abgezogen werden kann, und dass dem ersten Absetzbecken (4c) ein zweites Absetzbecken (5) nachgeschaltet ist, in welches Überlaufwasser aus dem ersten Absetzbecken (4c) geleitet werden kann, **dadurch gekennzeichnet, dass** im zweiten Absetzbecken (5) eine Einrichtung vorgesehen ist, mit der feinerer, durch Sedimentation abgesetzter Schlackensand direkt dem über die Wasseroberfläche des ersten Absetzbeckens (4c) hinausreichenden Entwässerungsbereich der Förderschnecke (4a) des ersten Absetzbeckens (4c) aufgegeben werden kann.

10. Anlage nach Anspruch 9, **dadurch gekennzeichnet, dass** der abgesetzte feinere Schlackensand dem Beginn des Entwässerungsbereichs der Förderschnecke (4a) aufgegeben werden kann.

11. Anlage nach einem der Ansprüche 9 oder 10, **dadurch gekennzeichnet, dass** der Saugstutzen einer oder mehrerer Schlammabzugspumpen (5b) in das zweite Absetzbecken (5) mündet, um sedimentierten Schlackensand über eine Leitung (5c) der Förderschnecke (4a) zuführen zu können.

12. Anlage nach Anspruch 11, **dadurch gekennzeichnet, dass** das zweite Absetzbecken (5) zumindest eine Vertiefung aufweist, in welche der Saugstutzen einer oder mehrerer Schlammabzugspumpen mündet.

13. Anlage nach einem der Ansprüche 11 oder 12, **dadurch gekennzeichnet, dass,** insbesondere in der Vertiefung, Fördereinrichtungen (5a), wie eine oder mehrere Förderschnecken oder Kettenförderer, vorgesehen sind, mit denen sedimentierter Schlackensand zum Saugstutzen der Schlammabzugspumpe (5b), welcher sich vorzugsweise unterhalb des Überlaufwassereintritts befindet, gefördert werden kann.

14. Anlage nach einem der Ansprüche 9 bis 13, **dadurch gekennzeichnet, dass** das zweite Absetzbecken (5) ein breites Fenster aufweist, das so mit dem ersten Absetzbecken verbunden ist, dass durch das Fenster Überlaufwasser mit horizontal gerichteter Strömung unterhalb der Wasseroberfläche eingeleitet werden kann.

15. Anlage nach einem der Ansprüche 9 bis 14, **dadurch gekennzeichnet, dass** im zweiten Absetzbecken (5) ein Lamellenabscheider angeordnet ist.

16. Anlage nach einem der Ansprüche 9 bis 15, **dadurch gekennzeichnet, dass** Leitungen vorgesehen sind, mit denen dem ersten (4c) und/oder dem zweiten (5) Absetzbecken Abschlämmwasser aus anderen Anlagen zugegeben werden kann.

## Claims

1. Method for slag granulation, in which molten slag is converted by means of water jets into slag sand, the slag sand is subsequently drained in a drainage installation (4), in that coarser slag sand is drawn off by means of at least one conveyor worm (4a) arranged obliquely in a first sedimentation basin (4c), and overflow water is conducted out of the first sedimentation basin (4c) into a second sedimentation basin (5), in which finer slag sand is deposited as a result of sedimentation, and overflow water being delivered again to slag granulation, **characterized in that** the deposited finer slag sand is fed directly to the drainage region of the conveyor worm (4a) of the first sedimentation basin (4c), said drainage region extending over the water surface of the first sedimentation basin (4c).

2. Method according to Claim 1, **characterized in that** the deposited finer slag sand is fed to the start of the drainage region of the conveyor worm (4a).

3. Method according to Claim 1 or 2, **characterized in that** the sedimented slag sand is drawn off by means of one or more sludge draw-off pumps.

4. Method according to one of Claims 1 to 3, **characterized in that** the second sedimentation basin (5) has at least one depression in which finer slag sand is sedimented.

5. Method according to either one of Claims 3 and 4, **characterized in that** the sedimented slag sand is conveyed by means of conveying devices (5a), such as one or more conveyor worms or a chain conveyor, to the suction connection piece of the sludge draw-off pump (5b), said suction connection piece preferably being located beneath the overflow water inlet.

6. Method according to one of Claims 1 to 5, **characterized in that** the overflow water is introduced via a wide window, with a horizontally directed flow, beneath the water surface of the second sedimentation basin (5).

7. Method according to one of Claims 1 to 6, **characterized in that** sedimentation takes place in the second sedimentation basin (5) by means of lamellae.

8. Method according to one of Claims 1 to 7, **characterized in that** desludging water from other installations is added to the first (4c) and/or the second (5) sedimentation basin.

9. Slag granulation installation with a device for converting molten slag into slag sand, said slag granulation installation being followed by a drainage installation (4) which has at least one conveyor worm (4a) which is arranged obliquely in a first sedimentation basin (4c) and by means of which coarser slag sand can be drawn off, the first sedimentation basin (4c) being followed by a second sedimentation basin (5) into which overflow water from the first sedimentation basin (4c) can be conducted, **characterized in that**, in the second sedimentation basin (5), a device is provided, by means of which finer slag sand deposited as a result of sedimentation can be fed directly to the drainage region of the conveyor worm (4a) of the first sedimentation basin (4c), said drainage region extending over the water surface of the first sedimentation basin (4c).

10. Installation according to Claim 9, **characterized in that** the deposited finer slag sand can be fed to the start of the drainage region of the conveyor worm (4a).

11. Installation according to either one of Claims 9 and 10, **characterized in that** the suction connection piece of one or more sludge draw-off pumps (5b) issues into the second sedimentation basin (5), so that sedimented slag sand can be delivered to the conveyor worm (4a) via a line (5c).

12. Installation according to Claim 11, **characterized in that** the second sedimentation basin (5) has at least one depression into which the suction connection piece of one or more sludge draw-off pumps issues.

13. Installation according to either one of Claims 11 and 12, **characterized in that**, particularly in the depression, conveying devices (5a), such as one or more conveyor worms or chain conveyors, are provided, by means of which sedimented slag sand can be conveyed to the suction connection piece of the sludge draw-off pump (5b), said suction connection piece preferably being located beneath the overflow water inlet.

14. Installation according to one of Claims 9 to 13, **characterized in that** the second sedimentation basin (5) has a wide window which is connected to the first sedimentation basin such that overflow water can be introduced through the window, with a horizontally directed flow, beneath the water surface.

15. Installation according to one of Claims 9 to 14, **characterized in that** a lamellar separator is arranged in the second sedimentation basin (5).

16. Installation according to one of Claims 9 to 15, **characterized in that** lines are provided, by means of which desludging water from other installations can be added to the first (4c) and/or the second (5) sedimentation basin.

## Revendications

1. Procédé de granulation de scories dans lequel des scories fondues sont converties en sable de scories par projection d'eau, le sable de scories étant ensuite débarrassé de son eau dans une installation (4) d'essorage tout en extrayant le sable de scories grossier par au moins une vis de transport (4a) disposée obliquement dans un premier bassin de dépôt (4c), l'eau surnageante étant amenée du premier bassin de dépôt (4c) jusque dans un deuxième bassin de dépôt (5) dans lequel le sable de scories fin se dépose par sédimentation, l'eau de débordement étant renvoyée dans la granulation des scories,
**caractérisé en ce que**
le sable de scories fin qui s'est déposé est délivré directement dans la zone d'essorage de la vis de transport (4a) du premier bassin de dépôt (4c) qui déborde au-dessus de la surface de l'eau dans le premier bassin de dépôt (4c).

2. Procédé selon la revendication 1, **caractérisé en ce que** le sable de scories fin déposé est délivré au début de la zone d'essorage de la vis de transport (4a).

3. Procédé selon les revendications 1 ou 2, **caractérisé en ce que** le sable de scories sédimenté est extrait au moyen d'une ou plusieurs pompes d'extraction de boue.

4. Procédé selon l'une des revendications 1 à 3, **caractérisé en ce que** le deuxième bassin de dépôt (5) présente au moins un creux dans lequel le sable de scories fin sédimente.

5. Procédé selon l'une des revendications 3 à 4, **caractérisé en ce que** le sable de scories sédimenté est transporté au moyen de dispositifs de transport (5a), par exemple une ou plusieurs vis de transport ou un transporteur à chaîne, vers la tubulure d'aspiration de la pompe (5b) d'aspiration de boue, laquelle tubulure se trouve de préférence en dessous de l'entrée d'eau de débordement.

6. Procédé selon l'une des revendications 1 à 5, **caractérisé en ce que** l'eau de débordement est introduite en dessous de la surface de l'eau du deuxième bassin de dépôt (5) par une large fenêtre et en un écoulement orienté à l'horizontale.

7. Procédé selon l'une des revendications 1 à 6, **caractérisé en ce que** la sédimentation dans le deuxième bassin de dépôt (5) s'effectue au moyen de lamelles.

8. Procédé selon l'une des revendications 1 à 7, **caractérisé en ce que** l'on ajoute dans le premier bassin de dépôt (4c) et/ou le deuxième bassin de dépôt (5) de l'eau de débourbage provenant d'autres installations.

9. Installation de granulation de scories qui présente un dispositif de conversion de scories fondues en sable de scories, suivi par une installation d'essorage (4) qui présente au moins une vis de transport (4a) disposée obliquement dans un premier bassin de dépôt (4c) et par laquelle le sable de scories grossier peut être extrait,
- le premier bassin de dépôt (4c) étant suivi par un deuxième bassin de dépôt (5) dans lequel l'eau de débordement du premier bassin (4c) peut être amenée,
**caractérisée en ce que**
- dans le deuxième bassin de dépôt (5) est prévu un dispositif par lequel le sable de scories fin déposé par sédimentation peut être délivré directement dans la zone d'essorage de la vis de transport (4a) du premier bassin de dépôt (4c), qui déborde au-dessus de la surface de l'eau du premier bassin de dépôt (4c).

10. Installation selon la revendication 9, **caractérisée en ce que** le sable de scories fin déposé peut être délivré au début de la zone d'essorage de la vis de transport (4a).

11. Installation selon l'une des revendications 9 ou 10, **caractérisée en ce que** la tubulure d'aspiration d'une ou plusieurs pompes de débourbage (5b) débouche par un conduit (5c) dans le bassin de dépôt (5) pour pouvoir amener à la vis de transport (4a) le sable de scories sédimenté.

12. Installation selon la revendication 11, **caractérisée en ce que** le deuxième bassin de dépôt (5) présente au moins un creux dans lequel débouche la tubulure d'aspiration d'une ou plusieurs pompes de débourbage.

13. Installation selon l'une des revendications 11 ou 12, **caractérisée en ce que** des dispositifs de transport (5a), par exemple une ou plusieurs vis de transport ou un transporteur à chaîne, sont prévus en particulier dans le creux et permettent de transporter vers la tubulure d'aspiration de la pompe de débourbage (5b) le sable de scories situé de préférence en dessous de l'entrée d'eau de débordement.

14. Installation selon l'une des revendications 9 à 13, **caractérisée en ce que** le deuxième bassin de dépôt (5) présente une large fenêtre reliée au premier bassin de dépôt de telle sorte que l'eau de débordement puisse être introduite par la fenêtre en dessous de la surface de l'eau, dans un écoulement orienté à l'horizontale.

15. Installation selon l'une des revendications 9 à 14, **caractérisée en ce qu'**un séparateur à lamelles est disposé dans le deuxième bassin de dépôt (5).

16. Installation selon l'une des revendications 9 à 15, **caractérisée en ce qu'**elle présente des conduits par lesquels de l'eau de débourbage provenant d'autres installations peut être amenée au premier bassin de dépôt (4c) et/ou au deuxième bassin de dépôt (5).
